# EUROPÄISCHE PATENTANMELDUNG

(11) **EP 1 622 244 A1**
(43) Veröffentlichungstag der Anmeldung: **01.02.2006**
(21) Anmeldenummer: 04018135.6
(22) Anmeldetag: 30.07.2004
(51) Int. Cl.: H02K 11/04, H02K 5/18, H02K 5/20, F04D 25/06

(54) **Elektromotor mit Elektronikmodul, insbesondere für ein Kühlgebläse**

(71) Anmelder: SIEMENS AKTIENGESELLSCHAFT, 80333 München (DE)
(72) Erfinder: Eisert, Horst, 97297 Waldbüttelbrunn (DE); Maier, Erich, 97078 Würzburg (DE)

(57) **Zusammenfassung**

Die Erfindung betrifft einen Elektromotor (1), insbesondere zur Verwendung in einem Kühlgebläse. Um eine verbesserte Kühlung eines Elektromotors zu erreichen, wird vorgeschlagen, in einem stirnseitigen Gehäuseteil (2c), welches das Elektronikmodul (4) aufnimmt, Durchströmungsöffnungen (3a) vorzusehen, welche in ihren Wandbereichen und/oder innerhalb der Öffnungen Luftleitflächen (3b) aufweisen, welche sich entlang eines Kühlluftstroms (10) zur kühlung des Elektromotors erstrecken und den Kühlluftstrom (10) in den Motorgehäuseinnenraum lenken.

## Beschreibung

Die Erfindung betrifft einen Elektromotor mit Elektronikmodul insbesondere zum Antrieb eines Kühlgebläses, zum Beispiel zur Verwendung als Kühlgebläse in einem Kraftfahrzeug.

Für einen sicheren Betrieb von Elektromotoren ist es erforderlich, dass die verwendeten Materialien und Komponenten bei gegebenen Betriebsbedingungen nicht überhitzt werden. Mit anderen Worten muss Sorge dafür getragen werden, dass bei einer definierten Umgebungstemperatur während des Betriebszustandes des Elektromotors mit maximaler Verlustleistung keine Überhitzung eines Motorbauteils eintritt. Bei Nichtbeachtung kann dies zu einer Verringerung der Lebensdauer des Elektromotors oder zu einem Totalausfall des Elektromotors führen. Daher ist das Kühlen oder Entwärmen des Elektromotors, also das Abführen der Verlustwärme, insbesondere in der Wicklung und im Eisen, von großer Bedeutung.

Moderne Elektromotoren sind jedoch mit einer integrierten Elektronik, z. B. zur bürstenlosen Kommutierung und/oder Drehzahlregelung, versehen, von der gegebenenfalls zusätzlich hohe Verlustwärme freigesetzt wird. Diese Elektronik stellt gleichzeitig die aus thermischer Sicht kritische Komponente eines Elektromotors dar und erhöht die Kühlungsanforderungen.

Auch der Einsatz zum Beispiel als Antriebseinheit eines Kühlgebläses für die Verbrennungsmaschine in einem Kraftfahrzeug erhöht aufgrund der extrem wechselnden Umgebungsbedingungen die Anforderungen bezüglich des Wärmehaushaltes des eingesetzten Elektromotors.

Bei zum Antrieb von Lüftern verwendeten Elektromotoren ist es bekannt, einen Luftstrom durch den Elektromotor zu führen, indem ein Druckunterschied zwischen der Abtriebsseite des Elektromotors und dessen Rückseite genutzt wird. So zeigt beispielsweise die europäische Patentanmeldung EP 1 050 682 A2 ein Kühlgebläse mit Elektromotor. Hierbei handelt es sich um einen Elektromotor mit innen liegendem gewickeltem Stator 5 und einem permanenterregten Außenrotor 4. Die Motorelektronik 25 befindet sich in einer Aufnahmekammer 23 auf der Außenseite des Statorfußes 8 des Elektromotors und ist mit einem separaten Deckel 24 abgedeckt. Die Lüfterradnabe 27 ist topfförmig ausgebildet und weist auf der Innenseite Lüfterschaufeln 29 auf, welche einen Kühlluftstrom erzeugen. Der Kühlluftstrom wird seitlich an Kühlrippen des Statorfußes vorbei in den Innenraum des Elektromotors geführt und verlässt diesen auf der gegenüberliegenden Seite durch Öffnungen im Boden des topfförmigen Außenrotors 4 und den Luftspalt zwischen der Lüfternabe 24 und dem Außenrotor 4 bei dem ein Kühlluftstrom zunächst an einem durch auf der Innenseite der Lüfternabe angeordnete innere Ventilationsflügel erzeugt wird.

Der Wärmeleitpfad von der Elektronik zu den Kühlrippen des Statorfußes ist lang, die Strecke des Kühlluftstromes an den Kühlrippen entlang ist kurz. Die von der innen liegenden Statorwicklung erzeugte Verlustwärme wird nur über den Luftstrom nach außen abgeführt. An den Seitenflächen des permanentmagnetisch erregten Außenrotors 4 kann aufgrund des Luftspaltes zwischen Innenstator und Außenrotor nur unwesentlich Wärme abgeführt werden. Diese Gestaltungsmerkmale erschweren die effektive Abfuhr der Verlustwärme. Zudem erfordert die Anordnung der Elektronik auf der Außenseite des Gehäuses einen zusätzlichen Gehäusedeckel der die Aufnahmekammer verschließt.

Aufgabe der Erfindung ist es, die Kühlung eines Elektromotors zu verbessern und gleichzeitig den konstruktiven Aufwand zu reduzieren. Diese Aufgabe wird durch einen Elektromotor mit den Merkmalen des Anspruchs 1 gelöst.

Die Erfindung basiert auf dem Grundgedanken, die Kühlung eines Elektromotors dadurch zu verbessern, dass in Wandbereichen oder innerhalb mindestens einer für einen Kühlluftstrom vorgesehene Durchströmungsöffnung Luftleitflächen ausgebildet sind, die sich entlang des Kühlluftstromes erstrecken und zumindest einen Teil des Luftstromes in den Motorgehäuseinnenraum lenken. Der Luftstrom wird dabei durch ein von dem Elektromotor selbst angetriebenen Lüfterelement generiert, welches einen Druckunterschied zwischen den beiden Stirnseiten des Elektromotors (Motorrückseite und Motorvorderseite) erzeugt.

Das Entlangführen des aufgrund des Druckunterschiedes bestehenden Kühlluftstrom an den Luftleitflächen der Durchströmungsöffnung umfasst dabei sowohl den Fall, dass Abwärme von den Luftleitflächen an einen in und durch das Motorinnere geführten Kühlluftstrom abgegeben wird, als auch den Fall, dass der Kühlluftstrom durch die Luftleitflächen so gelenkt wird, dass er unmittelbar auf wärmeführende Bauteile, zum Beispiel eine Statorwicklung, im Motorgehäuseinnenraum trifft wo er zusätzlich Abwärme des Elektromotors abführt. Die erhöhten Kühlungsanforderungen der Motorelektronik werden dadurch erfüllt, dass der Kühlluftstrom durch das mit der Motorelektronik wärmeleitend verbundenen stirnseitigen Motorgehäuseteil hindurch geführt wird. Dies eröffnet die Möglichkeit, den Kühlluftstrom sehr nahe an den Wärme erzeugenden Bauteilen des Elektronikmoduls vorbeizuführen und dadurch den Wärmeleitpfad über das stirnseitige Gehäuseteil maßgeblich zu verkürzen.

Vorteilhaft ist dabei das betreffende stirnseitige Motorgehäuseteil wärmeleitend mit dem beispielsweise Leistungshalbleiter, Strommesswiderstände oder Elektrolytkondensatoren umfassenden Motorelektronikmodul verbunden, so dass eine unmittelbare Wärmeabgabe der durch die Elektronik erzeugten Abwärme an das Motorgehäuseteil und auf kurzem Weg von diesem an den durchströmenden Kühlluftstrom erfolgen kann. Das Elektronikmodul ist hierfür vorzugsweise direkt an dem Motorgehäuseteil angeordnet. Beispielsweise kann das Elektronikmodul in dieses Motorgehäuseteil eingelassen oder mittels Wärmeleitkleber mit ihm verbunden sein. Besonders vorteilhaft ist eine Kapselung der Elektronik, die zum einen dem Schutz der eingeschlossenen Elektronik dient, und zum anderen dafür sorgt, dass die durch die Elektronik erzeugte Verlustwärme nicht in andere Bereiche des Elektromotors abgeleitet, sondern direkt vor Ort an das Motorgehäuseteil übergeben und von dort durch den Kühlluftstrom mitgenommen werden kann. Mit anderen Worten dient das Motorgehäuseteil als Kühlkörper für die Motorelektronik.

Durch angepasste Anordnung einer oder mehrerer Durchströmungsöffnungen in dem stirnseitigen Motorgehäuseteil, durch das der Kühlluftstrom in den Motorgehäuseinnenraum strömt und die Geometrie der Luftleitflächen kann die Kühlung sowohl bei einem Elektromotor mit permanenterregtem Innenrotor und außen liegender Statorwicklung als auch bei einem Elektromotor mit innen liegender Statorwicklung und permanenterregtem Außenrotor wie auch bei allen anderen Stator/Rotor-Kombinationen verbessert werden.

Im Gegensatz zu einem Elektromotor mit permanenterregtem Außenrotor kann bei einem permanenterregten Innenrotor ein Teil der von der Statorwicklung erzeugten Abwärme auch direkt über das Motorgehäuse nach außen abgeführt werden. Der Wärmeübergang ist somit im Vergleich zu einem permanenterregten Außenrotor wesentlich verbessert.

Die durch die Erfindung erreichte verbesserte Kühlung des Elektromotors erlaubt bei gleicher Leistung einen kleineren Bauraum oder bei gleichem Bauraum eine erhöhte Leistung. Zugleich wird eine hohe Betriebsdauer des Elektromotors gewährleistet. Ausfälle des Elektromotors aufgrund einer Überhitzung werden vermieden.

Der erfindungsgemäße Elektromotor wird insbesondere als Antrieb für Kühlerlüfter z. B. in Kraftfahrzeugen eingesetzt. Dies bietet die zusätzliche Möglichkeit das erforderliche Lüfterrad zur Erzeugung des Hauptluftstromes zur Erzeugung des Kühlluftstromes für den Elektromotor mitzubenutzen.

Vorteilhafte Ausgestaltungen der Erfindung sind in den Unteransprüchen beschrieben.

In einer vorteilhaften Ausführungsform der Erfindung sind in den Wandbereichen und ggf. auch innerhalb der Durchströmungsöffnungen des stirnseitigen Gehäuseteils zusätzliche Formelemente vorgesehen, die mehrere Funktionen erfüllen. Diese Formelemente können beispielsweise die Form von Platten, Rippen, Zapfen, Lamellen, Einbuchtungen, etc. aufweisen. Je nach Ausgestaltung vergrößern sie durch die zusätzliche Masse die Wärmekapazität des Gehäuseteils und die sich im Kühlluftstrom befindliche Gehäuseoberfläche über die Wärme an den Kühlluftstrom abgegeben wird, wobei die Oberfläche der Formelemente zusätzliche Luftleitflächen aufweisen können um den Kühlluftstrom in den Motorgehäuseinnenraum und dort gezielt auf wärmeführende Bauteile zu lenken.

Sind die Formelemente einstückig an dem betreffenden Gehäuseteil angeformt und bestehen aus demselben möglichst gut Wärme leitenden Material wie dieses, so ist die Wärme abführende Wirkung besonders gut. Es sind jedoch auch Lösungen möglich bei denen die Formelemente beispielsweise in einem umgebenden Material des Gehäuseteils eingegossen oder auf andere Weise mit diesem verbunden sind. Wichtig dabei ist lediglich, dass eine Wärme leitende Verbindung zwischen dem Wärme erzeugenden Elektronikmodul und den Wärme abgebenden Formelementen besteht.

Dadurch dass das Elektronikmodul im Innenraum des Motorgehäuses angeordnet wird, ist es besser vor Umgebungseinflüssen geschützt, ohne eine zusätzliche Abdeckung zu erfordern. Zusätzlich lässt sich so die Anzahl der erforderlichen Einzelteile reduzieren.

Vorzugsweise werden die Durchströmungsöffnungen im betreffenden Gehäuseteil so angeordnet und die Luftleitflächen so gestaltet, dass, durch deren Zusammenwirkung, der in das Motorgehäuse eintretende Kühlluftstrom unmittelbar auf wärmeführende Bauteile, zum Beispiel eine Statorwicklung oder zusätzliche Kühlkörper des Elektronikmoduls, trifft. So erreicht ein großer Luftmassenstrom die zu kühlenden Bauteile, wodurch eine effektive Kühlung der betreffenden Bauteile erzielt wird.

Bei einer weiteren Ausgestaltung der Erfindung werden Formelemente in den Wandbereichen der Durchströmungsöffnungen so ausgestaltet, dass diese in den Gehäuseinnenraum hineinragen. Dabei sind die Anordnung und die Ausgestaltung der Formelemente so gewählt, dass diese auf der Innenfläche des betreffenden stirnseitigen Gehäuseteils zumindest eine teilweise Abgrenzung eines Aufnahmebereiches für das Elektronikmodul bilden. Die Formelemente können beispielsweise eine wandförmige Umrandung um das auf der Innenseite des Gehäuseteils angeordnete Elektronikmodul bilden. Dadurch wird die Elektronik zusätzlich im Gehäuseinnenraum positioniert und gegen in den Motorgehäuseinnenraum eindringende Medien wie z. B. Spritzwasser abgeschirmt. Aber auch einfache zapfenförmig ausgebildete, in den Gehäuseinnenraum ragende Formelemente können beispielsweise zur Positionierung des Elektronikmoduls dienen.

Ein zusätzlicher Schutz gegen Umwelteinflüsse wie Spritzwasser und aufgewirbelte Schmutzpartikel kann dadurch erzielt werden, dass die Luftleitflächen und/oder zusätzliche Formelemente überlappend oder labyrinthartig angeordnet sind und somit die Durchströmungsöffnungen zumindest bezüglich einer Haupt-Einwirkungsrichtung der umgebenden Störeinflüsse weitestgehend abgedeckt sind. Dies erhöht den Schutz der Motorkomponenten im Gehäuse und somit die Robustheit des Elektromotors gegenüber rauen Umgebungsbedingungen, was vor allem beim Einsatz des Elektromotors in einem Kraftfahrzeug von Vorteil ist und die Lebensdauer des Elektromotors verlängert.

Wird das Motorgehäuse mehrteilig aufgebaut und zumindest das stirnseitige Gehäuseteil, welches das Elektronikmodul aufnimmt, als separater Gehäusedeckel gestaltet, so ergeben sich Vereinfachungen bei der Montage und bei der Wartung oder Reparatur des Elektromotors. So können einzelne Baueinheiten effizient als Baugruppen vormontiert und dann zu dem Elektromotor zusammengebaut werden. Einzelne Moduleinheiten können, zum Beispiel bei einem Defekt leicht ausgetauscht werden.
Auch die Herstellung der Gehäuse-Einzelteile vereinfacht sich dadurch und das Material kann abgestimmt auf die Erfordernisse der einzelnen Gehäuseteile besser und variabler abgestimmt werden. Für eine optimale Wärmeabgabe an den Kühlluftstrom ist das stirnseitige Motorgehäuseteil, welches das Elektronikmodul aufnimmt, vorzugsweise aus Aluminiumdruckguss gefertigt. Die Verwendung von Druckgussteilen erlaubt dabei eine verhältnismäßig komplizierte Geometrie des Gehäuseteils und der Luftleitflächen sowie ggf. an den Durchströmungsöffnungen angeordneter Formelemente zur Kühlungsoptimierung, wie sie bei der Verwendung von herkömmlichen Stanzbiegeteilen oder tiefgezogenen Stahlgehäusen nur durch zusätzliche Bearbeitung oder zusätzliche Bauteile möglich sind.

Gleichzeitig weisen Druckgussteile eine hohe mechanische Stabilität auf. Gerade die hohe Stabilität eines so hergestellten Gehäusedeckels ermöglicht es ein Rotorwellenlager unmittelbar im Gehäusedeckel vorzusehen. Ein zusätzliches Lagerschild wird dadurch überflüssig und es liegt ein Bauteil vor, das mehrere Funktionen in sich vereint und somit separate Bauteile und Montagevorgange spart.

Die vorliegende Erfindung wird nachfolgend anhand von Zeichnungen näher erläutert wird. Hierbei zeigen:
- FIG 1: eine vereinfachte schematische Darstellung eines Elektromotors für ein Lüftergebläse,
- FIG 2: eine perspektivische Außenansicht eines stirnseitigen Motorgehäuseteils das als Gehäusedeckel ausgeführt ist,
- FIG 3: einen vergrößerten Ausschnitt der Ansicht aus Figur 2, im Bereich einer Durchströmungsöffnung,
- FIG 4: eine Innenansicht des stirnseitigen Motorgehäuseteils aus Figur 2,
- FIG 5: eine Innenansicht einer weiteren Ausführung eines stirnseitigen Motorgehäuseteils mit Durchströmungsöffnungen und darin aufgenommenem Elektronikmodul und
- FIG 6: mehrere Ausführungsformen (FIG 6a bis 6d) von Durchströmungsöffnungen mit zusätzlich angeordneten Formelementen und Luftleitflächen.

Funktions- und benennungsgleiche Teile sind in den Figuren mit denselben Bezugszeichen versehen.

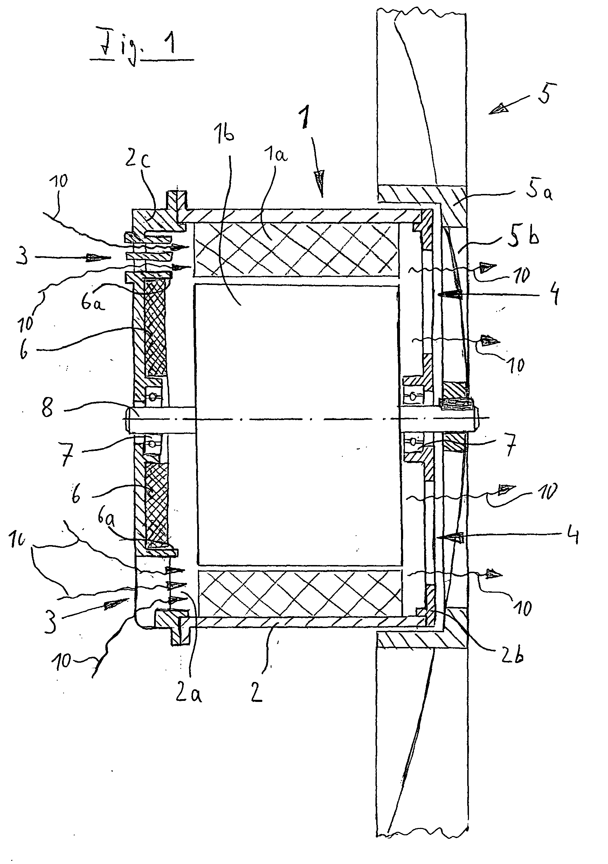

In FIG 1 ist ein Ausführungsbeispiel eines Elektromotors 1, wie es zum Beispiel in einem Kraftfahrzeug-Kühlgebläse eingesetzt wird in stark vereinfachter schematischer Darstellung abgebildet. Der Elektromotor 1 ist zu diesem Zweck mit einem Lüfterrad 5 ausgerüstet, das drehfest auf einer Rotorwelle 8 befestigt ist.

Der Elektromotor 1 weist einen außen liegenden Stator 1a und einen innen laufenden Rotor 1b auf, die sich in einem Motorgehäuseinnenraum 2a des Motorgehäuses 2 befinden. Das Motorgehäuse 2 weist weiterhin zwei stirnseitige Gehäusedeckel 2b und 2c auf, die das Motorgehäuse 2 jeweils stirnseitig abschließen. In diesem Beispiel ist in dem der Lüfterradseite abgewandten Gehäusedeckel 2c ein Elektronikmodul 4 im Motorgehäuseinnenraum 2a untergebracht.

Der Gehäusedeckel 2c, der das Elektronikmodul 4 aufnimmt, weist Durchströmungsöffnungen 3 mit Luftleitflächen 3a und Formelementen 3b auf. Die Formelemente 3b sind im Wandbereich und innerhalb der Durchströmungsöffnungen 3 angeordnet und weisen ihrerseits Luftleitflächen 3a auf. In den Motorgehäuseinnenraum ragende Formelemente bilden eine Begrenzung 6a für den Aufnahmebereich 6 für das Elektronikmodul 4.

In den beiden stirnseitigen Gehäusedeckeln 2b und 2c sind in zentriert angebrachten Lagersitzen 7a Rotorwellenlager 7 angeordnet, in denen die Rotorwelle 8 gelagert ist. Die beiden Gehäusedeckel 2b und 2c dienen so gleichzeitig als Lagerschilde des Elektromotors.

Das Lüfterrad 5 weist eine topfförmige Lüfterradnabe 5a auf, welche die betreffende Stirnseite des Elektromotors und einen Teil der axialen Baulänge des Motorgehäuses 2 umgreift. Radial innerhalb des Umfangs der Lüfterradnabe 5a ist ein Lüfterelement 5b angeordnet. Sobald das Lüfterrad 5 in Rotation versetzt wird erzeugt das Lüfterelement 5b ein Druckgefälle zwischen den beiden Stirnseiten des Motorgehäuses. Dadurch bildet sich ein Kühlluftstrom aus, der durch die Durchströmungsöffnungen 3 des Gehäusedeckels 2c, welcher das Elektronikmodul trägt, in den Motorgehäuseinnenraum 2a eintritt. Dabei überströmt er die Luftleitflächen 3a und die Formelemente 3b und nimmt dabei Wärmeenergie, die vom Elektronikmodul 4 erzeugt wird auf.
Die Durchströmungsöffnungen 3 im Gehäusedeckel 2c und die Luftleitflächen 3a sind so angeordnet, dass der Kühlluftstrom im Motorgehäuseinnenraum 2a unmittelbar auf den gewickelten, elektrisch erregten Stator 1a trifft und dort Wärmeenergie aufnimmt, die von den Statorwicklungen erzeugt wird. Der Kühlluftstrom durchfließt den Motorgehäuseinnenraum und verlässt diesen wieder auf der gegenüberliegenden Seite durch die Durchströmungsöffnungen 3 im lüfterradseitigen Gehäusedeckel 2b und führt die aufgenommene Wärmeenergie somit in die Umgebungsluft ab.

Eine Ausführungsform des Gehäusedeckels 2c, der ein Elektronikmodul aufnimmt ist in Figur 2 in Außenansicht perspektivisch dargestellt. Die Oberfläche 2d des Gehäusedeckels bildet eine Stirnseite des Motorgehäuses (nicht dargestellt) die Durchströmungsöffnungen 3 und Formelemente 3b aufweist, von denen jeweils nur 3 beispielhaft mit Bezugszeichen gekennzeichnet sind. Die Durchströmungsöffnungen 3 und Formelemente 3b sind am äußeren Rand des Gehäusedeckels 2c angeordnet und verlaufen auf der Oberfläche 2d des Gehäusedeckels 2c von vier jeweils um 90° versetzten Seiten aus jeweils parallel auf die gegenüberliegende Seite zu. Die Durchströmungsöffnungen 3 und Formelemente 3b enden jeweils von einer Seite kommend auf einer jeweiligen Segmentlinie der im Wesentlichen kreisförmigen Oberfläche 2d.

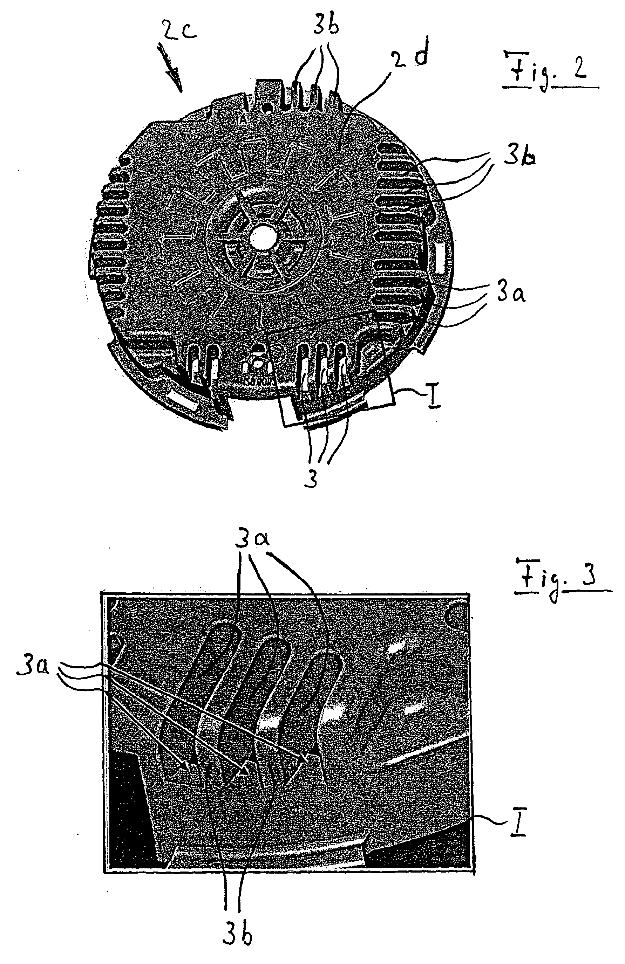

Figur 3 zeigt einen vergrößerten Ausschnitt des Gehäusedeckels aus Figur 2, in dem ein Bereich einer Durchströmungsöffnung dargestellt ist. Es ist eine Durchströmungsöffnung dargestellt, die von Luftleitflächen 3a begrenzt ist und innerhalb derer rippenförmige Formelemente 3b mit zusätzlichen Luftleitflächen 3a angeordnet sind.

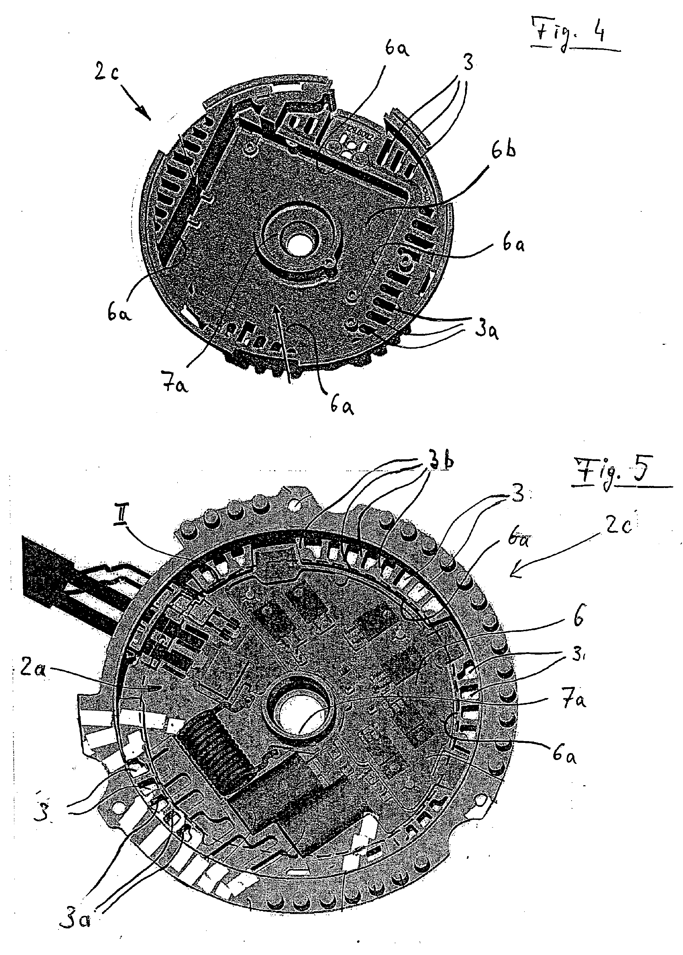

Der in Figur 2 dargestellte stirnseitige Gehäusedeckel 2c ist auch in Figur 4 dargestellt. Figur 4 zeigt jedoch die Innenseite des Gehäusedeckels 2c. Hier ist deutlich zu erkennen, dass die Ausformung und Anordnung der Wandbereiche und Formelemente der Durchströmungsöffnungen 3 seitliche Begrenzungen 6a auf der Innenseite des Gehäusedeckels bilden, die zusammen einen Aufnahmebereich 6 ausbilden, in dem das Elektronikmodul (nicht dargestellt) angeordnet wird. Im Zentrum des Gehäusedeckels ist weiterhin eine zentrisch angeordnete kreisrunde Ausformung vorgesehen, die als Lagersitz 7a für ein Rotorwellenlager 7 (hier nicht dargestellt) dient. Der Gehäusedeckel 2c übernimmt somit gleichzeitig die Funktion des Lagerschildes des Elektromotors. Die Formgebung des Gehäusedeckels lässt gleichzeitig erkennen, dass es sich hier um ein Gussteil handelt, das vorzugsweise aus Leichtmetall im Druckgussverfahren hergestellt wird.

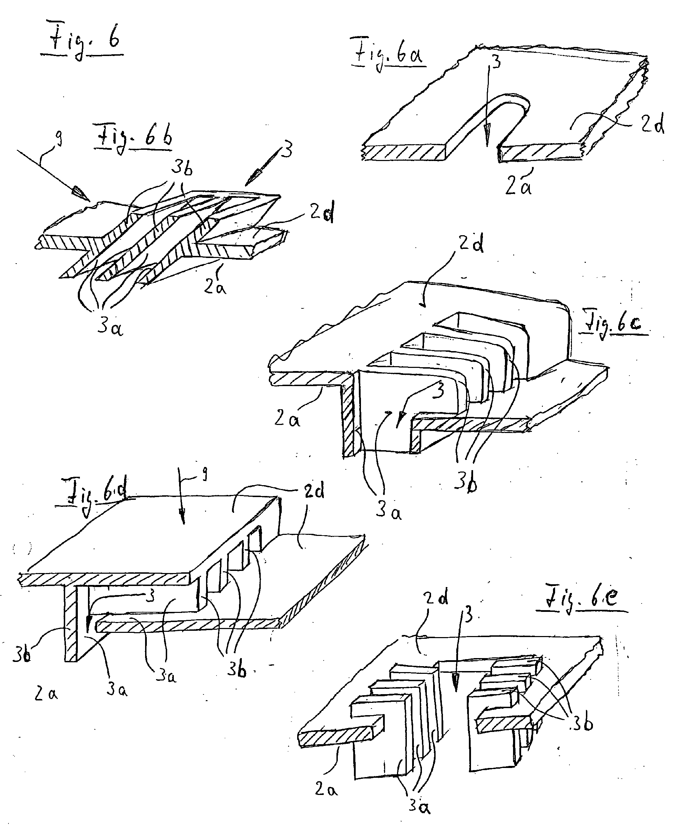

Figur 5 zeigt die Innenansicht einer weiteren Ausführungsform eines stirnseitigen Gehäuseteils, das als Gehäusedeckel 2c ausgelegt ist. Bei dieser Ausführung sind die anhand verschiedener Beispiele gekennzeichneten Durchströmungsöffnungen 3 ebenfalls am Außenrand der stirnseitigen Oberfläche angeordnet. In diesem Fall verlaufen diese jedoch radial auf das Zentrum des im Wesentlichen runden Gehäusedeckels zu bis auf eine gemeinsame Kreislinie. Die Durchströmungsöffnungen sind durch wandartige Formelemente 3b unterteilt und auf der genannten Kreislinie von ebensolchen Formelementen 3b begrenzt. Diese wandartigen Formelemente bilden auf der genannten Kreislinie gleichzeitig eine Begrenzung 6a eines Aufnahmebereiches für das Elektronikmodul 4, das auf der Innenseite des Gehäusedeckels 2c angeordnet ist. Auch hier ist im Zentrum des Gehäusedeckels 2c ein Lagersitz 7a zur Aufnahme eines Rotorwellenlagers 7 (nicht dargestellt) angeordnet.

In Figur 6b bis 6e sind in Ausschnitten verschiedene Ausführungsmöglichkeiten von Durchströmungsöffnungen 3 mit angeordneten Formelementen 3b und Luftleitflächen 3a dargestellt. Diese Beispiele zeigen deutlich, wie gegenüber einer einfachen Aussparung oder Durchgangsbohrung in der GehäuseStirnseite, wie in Figur 6a dargestellt, durch die Anordnung von Luftleitflächen 3a und Formelementen 3b sowohl in den Wandbereichen als auch innerhalb der Durchströmungsöffnungen, der Kühlluftstrom entlang den Luftleitflächen gelenkt wird. Auf diese weise lässt sich der Kühlluftstrom gezielt auf wärmeführende Bauteile im Motorgehäuseinnenraum lenken.

Gleichzeitig wird durch die zusätzliche Masse die Wärmekapazität des Gehäuseteils erhöht. Dies bewirkt, dass mehr Wärme schneller von dem Wärme erzeugenden Bauteil, wie zum Beispiel dem Elektronikmodul, in das wärmeleitend damit verbundene Gehäuseteil abgeführt werden kann. Dadurch werden thermische Spitzenbelastungen effektiv gepuffert und das Gesamtsystem Elektromotor wesentlich robuster gegenüber thermischen Belastungen.

Ebenfalls wird die vom Kühlluftstrom überströmte Oberfläche des Gehäuseteils deutlich vergrößert. Dadurch kann mehr Wärme von der Oberfläche des Gehäuseteils an den Kühlluftstrom abgegeben werden, wodurch die Kühlleistung des Kühlluftstromes erhöht wird. Auf diese Weise wirkt das Gehäuseteil, das wärmeleitend mit Wärme erzeugenden Bauteilen beispielsweise im Motorgehäuseinnenraum 2a verbunden ist als Kühlkörper.

In den Figuren 6b und 6d ist beispielhaft die abschirmende Wirkung von Luftleitflächen und Formelementen gegenüber aus bestimmten Haupt-Einwirkungsrichtungen 9 einwirkenden Umwelteinflüssen, wie zum Beispiel Spritzwasser, schematisch dargestellt. Gegenüber den durch Pfeile gekennzeichneten Haupt-Einwirkungsrichtungen 9 werden die Durchströmungsöffnungen 3 durch die Anordnung von Luftleitflächen und Formelementen bezüglich der jeweils senkrecht zur Haupt-Einwirkungsrichtung liegenden Projektionsebene abgedeckt. Ein im Wesentlichen aus der Haupt-Einwirkungsrichtung auftreffender Spritzwasserstrahl wird durch die angeordneten Formelemente von der Durchströmungsöffnung 3 weg gelenkt. Dadurch wird erreicht, dass trotz der erforderlichen Durchströmungsöffnungen im Normalbetrieb keine großen Mengen schädlicher Umgebungsmedien in den Motorgehäuseinnenraum eindringen.

## Patentansprüche

1. Elektromotor (1), insbesondere für ein Kühlgebläse (1c), bestehend aus
- einem Motorgehäuse (2) mit einem Stator (1a) und einem Rotor (1b) in einem Motorgehäuseinnenraum (2a), und einem Elektronikmodul (4) sowie
- einem Lüfterelement (5), welches einen Druckunterschied zwischen den beiden im wesentlichen parallel zur Rotationsebene des Rotors (1a) angeordneten Stirnseiten (2b) des Motorgehäuses (2) erzeugt in Folge dessen sich ein Kühlluftstrom ausbildet,
- wobei das Elektronikmodul (4) auf einem stirnseitig angeordneten Gehäuseteil (3) des Motorgehäuses (2) angeordnet und mit diesem wärmeleitend verbunden ist,
**dadurch gekennzeichnet,**
- **dass** das stirnseitige Gehäuseteil (3), welches das Elektronikmodul (4) aufnimmt mindestens eine Durchströmungsöffnung (3a) für den Kühlluftstrom aufweist und
- **dass** in den Wandbereichen der Durchströmungsöffnung (3a) und/oder innerhalb der Durchströmungsöffnung (3a) Luftleitflächen (3b) ausgebildet sind, die sich entlang des Kühlluftstroms erstrecken und den Kühlluftstrom in den Motorgehäuseinnenraum (2a) lenken.

2. Elektromotor (1) nach Anspruch 1, **gekennzeichnet dadurch, dass** in den Wandbereichen der Durchströmungsöffnung (3a) und/oder innerhalb der Durchströmungsöffnung (3a) Formelemente (3c) angeordnet sind, die als Kühlelemente dienen und deren Oberflächen als Luftleitflächen (3b) ausgebildet sind.

3. Elektromotor (1) nach Anspruch 2, **gekennzeichnet dadurch, dass** die Formelemente (3c) einstückig mit und aus dem Material des stirnseitigen Gehäuseteils (3), welches das Elektronikmodul (4) aufnimmt, ausgebildet sind.

4. Elektromotor (1) nach einem der Ansprüche 1 bis 3, **gekennzeichnet dadurch, dass** das Elektronikmodul (4) im Motorgehäuseinnenraum (2a) des Elektromotors (1) angeordnet ist.

5. Elektromotor (1) nach einem der Ansprüche 1 bis 4, **dadurch gekennzeichnet, dass** mindestens eine Durchströmungsöffnung (3a) in dem stirnseitigen Gehäuseteil (3) so angeordnet und die Luftleitflächen 3b so ausgebildet und/oder angeordnet sind, dass zumindest ein Teil eines durch die Durchströmungsöffnung (3a) eintretenden Kühlluftstroms unmittelbar zu Wärme führenden Bauteilen im Motorgehäuseinnenraum (2a) gelenkt wird.

6. Elektromotor (1) nach einem der Ansprüche 2 bis 5, **dadurch gekennzeichnet, dass** zumindest ein Teil der als Kühlelemente dienenden Formelemente (3c) im Bereich des äußeren Umfangs des Elektronikmoduls im Motorgehäuseinnenraum (2a) angeordnet sind und zumindest eine teilweise Begrenzung (6a) eines Aufnahmebereiches (6) für das Elektronikmodul (4) im Motorgehäuseinnenraum (2a) bilden.

7. Elektromotor (1) nach einem der Ansprüche 2 bis 6, **dadurch gekennzeichnet, dass** die als Kühlelemente wirkenden Formelemente (3c) und Luftleitflächen (3b) derart ausgebildet und angeordnet sind, dass sie bezogen auf bestimmte Haupt-Einwirkungsrichtungen (9) sich gegenseitig und die Durchströmungsöffnungen zumindest teilweise überdecken und so gegen Spritzwasser- oder Schmutz-Eintrag von außen in den Motorgehäuseinnenraum (2a) abweisend wirken.

8. Elektromotor (1) nach einem der Ansprüche 1 bis 7, **dadurch gekennzeichnet, dass** das Motorgehäuse (2) mehrteilig aufgebaut ist, wobei zumindest das stirnseitige Gehäuseteil (3) welches das Elektronikmodul (4) aufnimmt, als ein separater Gehäusedeckel (2c) und vorzugsweise als Leichtmetall-Gussteil ausgebildet ist.

9. Elektromotor (1) nach Anspruch 9, **dadurch gekennzeichnet, dass** der das Elektronikmodul (4) aufnehmende Gehäusedeckel (2c) gleichzeitig als ein Lagerschild dient, der ein Rotorwellenlager (7) für den Rotor (1b) des Elektromotors (1) aufnimmt.
